# EUROPÄISCHE PATENTANMELDUNG

(11) **EP 0 772 966 A1**
(43) Veröffentlichungstag der Anmeldung: **14.05.1997**
(21) Anmeldenummer: 96117826.6
(22) Anmeldetag: 07.11.1996
(51) Int. Cl.: A01D 27/00, B62D 53/00

(54) **Selbstfahrende Rübenerntemaschine**

(30) Priorität: 09.11.1995 DE 19541872
(71) Anmelder: Franz Kleine Maschinenfabrik GmbH & Co., D-33154 Salzkotten (DE)
(72) Erfinder: Schulte, Reinhold, 33106 Paderborn-Elsen (DE); Schutte, Wolfgang, 32257 Bünde (DE)
(74) Vertreter: Patentanwälte Rehberg + Hüppe

(57) **Zusammenfassung**

Eine selbstfahrende Rübenerntemaschine (1) weist mindestens eine Vorderachse (2) und mindestens eine Hinterachse (3), einen Maschinenrahmen und einen Tragrahmen (6), auf dem Arbeitswerkzeuge (7), insbesondere eine Köpf- (8) und eine nachgeordnete Rodeeinrichtung (9), angeordnet sind, auf. Es ist eine sich auf die Räder aller Achsen (2, 3) auswirkende Lenkeinrichtung vorgesehen. Der Maschinenrahmen ist in einen Vorderachsrahmen (4) und einen Hinterachsrahmen (5) unterteilt. Die Lenkeinrichtung weist zwei um vertikale Achsen (17, 18) schwenkbare Knickgelenke (14, 15) auf. Das eine Knickgelenk (14) ist an dem Vorderachsrahmen (4) und das andere Knickgelenk (15) an dem Hinterachsrahmen (5) angeordnet. Die beiden Knickgelenke (14, 15) sind beabstandet zueinander in der Längsmittelebene (28) der Rübenerntemaschine (1) angeordnet und über einen Koppelträger (16) miteinander verbunden. Jedes Knickgelenk (14, 15) ist mit je einer Betätigungseinrichtung (20, 25) ausgestattet.

## Beschreibung

Die Erfindung betrifft eine selbstfahrende Rübenerntemaschine, mit mindestens einer Vorderachse und mindestens einer Hinterachse, einem Maschinenrahmen und einem Tragrahmen, auf dem Arbeitswerkzeuge, insbesondere eine Köpf- und eine nachgeordnete Rodeeinrichtung, angeordnet sind, wobei eine sich auf die Räder aller Achsen auswirkende Lenkeinrichtung vorgesehen ist. Die Rübenerntemaschine kann in ganz verschiedener Weise ausgebildet sein, beispielsweise als Köpfroder, als Köpfroderbunker, als Rübenaufnehmer und dgl.. Sie kann einreihig, insbesondere aber auch mehrreihig bzw. vielreihig arbeitend ausgebildet sein.

Eine selbstfahrende Rübenerntemaschine der eingangs beschriebenen Art ist bekannt. Sie besitzt eine Vorderachse und eine Hinterachse sowie einen von diesen Achsen getragenen Maschinenrahmen. Auf dem Maschinenrahmen ist insbesondere der Bunker zur Aufnahme der gerodeten Rüben angeordnet. Weiterhin ist ein Tragrahmen vorgesehen, der sich zumindest teilweise vor die Vorderachse der Rübenerntemaschine erstreckt und auf dem die betreffenden Arbeitswerkzeuge angeordnet sind. Die Rübenerntemaschine besitzt eine Lenkeinrichtung, die sich auf die Räder aller Achsen auswirkt. An sämtlichen Rädern der Vorderachse und der Hinterachse ist eine Achsschemellenkung realisiert. Die vier Achsschenkel sind am Maschinenrahmen gelagert. Der die Arbeitswerkzeuge aufnehmende Tragrahmen bildet mit dem Maschinenrahmen eine starre Einheit. Diese bekannte selbstfahrende Rübenerntemaschine besitzt damit vorteilhaft eine Allradlenkung. Über den Einschlag der Vorderachse wird der entsprechende Einschlag der Hinterachse ausgesteuert. Die Lenkung ist auf eine sog. Hundeganglenkung umstellbar, bei der der Einschlag der Hinterachse und der Einschlag der Vorderachse gleich und gleichläufig gekoppelt sind. Schließlich ist die Lenkeinrichtung auch noch auf eine Lenkautomatik umstellbar, wobei die Vorderachse über einen Fühler im Bereich der Arbeitswerkzeuge gelenkt wird. Nachteilig an dieser bekannten Rübenerntemaschine ist es, daß der durchgehende Maschinenrahmen einen relativ großen Wenderadius erfordert. Die Räder der Hinterachse laufen ohne Spurversatz in der Spur der Räder der Vorderachse, so daß hier in der gemeinsamen Spur eine zweifache Bodenverfestigung eintritt. Lenkbewegungen können in nachteiliger Weise dazu führen, daß zumindest das eine Rad der Hinterachse in die noch stehende Rübenreihe hineinfährt. Aber auch in konstruktiver Hinsicht sind mit dieser Achsschemellenkung verschiedene Nachteile verbunden. Es muß ein Bauraum für das Einschlagen der Räder über die Achsschenkel freigehalten werden, so daß dort keine anderen Elemente der Rübenerntemaschine angeordnet werden können. Auch die Lage der Arbeitswerkzeuge ist gegenüber dem Maschinenrahmen fixiert, d. h. eine Winkeleinstellung oder ein seitliches Ausweichen ist nicht möglich.

Bei einer weiteren bekannten 6-reihig arbeitenden Rübenerntemaschine ist die Hinterachse ebenfalls mit zwei Achsschenkeln ausgestattet. Die Vorderachse, die als Starrachse ausgebildet ist, ist jedoch mit einem Drehschemel versehen. Auch hier ist der die Arbeitswerkzeuge aufnehmende Tragrahmen mit dem Maschinenrahmen fest verbunden. Auch diese Maschine besitzt eine Lenkeinrichtung, die eine Allradlenkung, eine Hundeganglenkung und eine automatische Lenkung ermöglicht.

Der Erfindung liegt die Aufgabe zugrunde, eine Rübenerntemaschine der eingangs beschriebenen Art zu schaffen, bei dem der Tragrahmen mit den Arbeitswerkzeugen parallel zur Rübenreihe oder einem Schwad geführt werden kann, ohne daß die Spur der Hinterachse dazu festgelegt ist.

Erfindungsgemäß wird dies bei der Rübenerntemaschine der eingangs beschriebenen Art dadurch erreicht, daß der Maschinenrahmen in einen Vorderachsrahmen und einen Hinterachsrahmen unterteilt ist, daß die Lenkeinrichtung zwei um vertikale Achsen schwenkbare Knickgelenke aufweist, daß das eine Knickgelenk an dem Vorderachsrahmen und das andere Knickgelenk an dem Hinterachsrahmen angeordnet ist, daß die beiden Knickgelenke beabstandet zueinander in der Längsmittelebene der Rübenerntemaschine angeordnet und über einen Koppelträger miteinander verbunden sind, und daß jedes Knickgelenk mit je einer Betätigungseinrichtung ausgestattet ist.

Die Erfindung geht von dem Gedanken aus, als Lenkeinrichtung eine besondere Knicklenkung vorzusehen. Hierzu wird zunächst der Maschinenrahmen geteilt, und zwar in einen separaten Vorderachsrahmen und einen separaten Hinterachsrahmen. Der Vorderachsrahmen ist auf der Vorderachse abgestützt. Der Hinterachsrahmen auf der Hinterachse. Es versteht sich, daß sowohl die Vorderachse als auch die Hinterachse auch mehrachsig ausgebildet sein können. Infolge dieser Unterteilung ergibt sich eine Bewegungsmöglichkeit zwischen dem Vorderachsrahmen und dem Hinterachsrahmen. Es werden zwei Knickgelenke vorgesehen, wobei das eine Knickgelenk gleichsam am Ende des Vorderachsrahmens und das andere Knickgelenk am Anfang des Hinterachsrahmens angeordnet sind. Wichtig ist es, daß die beiden Knickgelenke beabstandet zueinander angeordnet sind. Dieser Abstand wird durch einen Koppelträger überbrückt. Dieser Koppelträger ist als drittes Teil neben dem Vorderachsrahmen und dem Hinterachsrahmen ein wesentliches Element, um jeweils eine Betätigungseinrichtung zwischen den Vorderachsrahmen und den Koppelträger einerseits und zwischen den Koppelträger und den Hinterachsrahmen andererseits einzuschalten. Die beiden Betätigungseinrichtungen können unabhängig voneinander, aber auch abgestimmt aufeinander betätigt bzw. gesteuert werden. Die Erfindung ist unabhängig davon anwendbar, ob nur eine oder alle Achsen der Rübenerntemaschine angetrieben sind.

Mit der neuen Rübenerntemaschine werden eine Reihe von Vorteilen erreicht. Die Räder und Reifen der Achsen können sehr breit gestaltet werden, da ein Einschwenkraum infolge Vermeidung einer Achsschenkellenkung nicht benötigt wird. Dies erspart Bauraum, der andererseits für die Anordnung anderer Elemente, beispielsweise von Förder- und Reinigungselementen, zur Verfügung steht. Besonders sinnvoll ergibt sich die Möglichkeit, die Vorderachse und die Hinterachse der Rübenerntemaschine spurversetzt zueinander zu betreiben, also insbesondere während des Rodens der Rüben versetzt zu fahren, so daß nicht mehr die Gefahr besteht, daß die Hinterachse in den Rübenbestand einfährt. Da die Spur der Hinterachse versetzt zur Spur der Vorderachse läuft, ergibt sich eine vergleichsweise geringere Bodenverdichtung bzw. auch eine Vergleichmäßigung über die Breite der Rübenerntemaschine. Diese Möglichkeiten wirken sich auch vorteilhaft aus, wenn die Rübenerntemaschine für mehr als sechs Reihen ausgebildet ist, beispielsweise für 10- bzw. 12-reihige Arbeitsweise. Durch die versetzte Bewegungsmöglichkeit des Hinterachsrahmens, der in der Regel auch den Bunker zur Aufnahme der Rüben trägt, kann eine geringere Überladedistanz zu Ladewagen o. dgl. sinnvoll genutzt werden. Die Anordnung des Koppelträgers zwischen den beiden Knickgelenken und der Angriff der beiden Betätigungseinrichtungen in der beschriebenen Weise vermeidet eine gegenläufige Beeinflussung, wenn z. B. nur die Hinterachse gelenkt wird. Dies bedeutet, daß mit der neuen Lenkeinrichtung der Vorderachsrahmen einerseits und der Hinterachsrahmen andererseits - in bestimmten Grenzen - separat und unabhängig voneinander gelenkt werden können. So kann z. B. auch nur die Hinterachse gelenkt werden, wenn sich die Betätigungseinrichtung der Vorderachse in Schwimmstellung befindet.

Besonders einfach ist es, die Transportstellung zu realisieren. Es kann dann das eine oder auch das andere Knickgelenk festgestellt werden, und die Lenkung erfolgt über das jeweils andere Knickgelenk. Mit der neuen Knicklenkung ist auch eine Allradlenkung und eine von einem Fühler gesteuerte Lenkautomatik möglich. Alle Achsen können angetrieben sein. Dies stört in keiner Weise. Schließlich ergibt sich noch vorteilhaft ein verringerter Bauaufwand durch die Verwendung von Starrachsen anstelle von Achsschenkeln. Die neue Knicklenkung ermöglicht auch eine Modulbauweise, wobei unterschiedlich gestaltete Vorderachseinheiten mit unterschiedlich gestalteten Hinterachseinheiten kombiniert werden können. Auch eine Verlängerung bzw. Verkürzung des Koppelträgers ist leicht durchführbar, um auf diese Art und Weise eine Anpassung an besondere Bedingungen zu erhalten.

Die Vorderachse und die Hinterachse der Rübenerntemaschine können als Starrachsen ausgebildet sein, und zwar auch dann, wenn beispielsweise die Hinterachse mehrachsig ausgebildet ist. Dies reduziert den Bauaufwand, ohne die verschiedenen Möglichkeiten der Lenkung zu beeinträchtigen.

Zwischen der Vorderachse und dem Vorderachsrahmen kann ein Drehschemel vorgesehen sein. Die als Starrachse ausgebildete Vorderachse ist damit auf einem Drehschemel gelagert, also um eine vertikale Achse in Fahrzeuglängsmittelebene schwenkbar. Von der Verschwenkung wird auch der Vorderachsrahmen erfaßt. Damit ist auch eine Hundeganglenkung möglich.

Die Ausbildung der Betätigungseinrichtung bzw. der Betätigungseinrichtungen kann in mehrfacher Weise erfolgen. Beispielsweise kann eine hydraulische Verstelleinrichtung mit doppelt-wirkenden Zylindern vorgesehen sein. Auch die Anordnung und Verwendung von elektrischen oder hydraulischen Schrittmotoren als Betätigungseinrichtung ist möglich.

Der Hinterachsrahmen kann auch auf zwei oder mehr Hinterachsen abgestützt sein. Auch die Verwendung einer Achse mit nur einem Rad ist an dieser Stelle möglich. Andererseits kann die Hinterachse aber auch mehr als zwei Räder aufweisen, wobei die Räder dann über die Breite der Rübenerntemaschine verteilt angeordnet sind. Da ein Einschlag der Räder infolge der Starrachse vermieden wird, kann die Bodenverdichtung auf diese Art und Weise gleichmäßig über die Breite der Rübenerntemaschine verteilt werden.

Der Tragrahmen kann mit dem Vorderachsrahmen drehfest verbunden oder einstückig mit diesem ausgebildet sein. Der Vorderachsrahmen bildet dabei gleichzeitig den Tragrahmen. Andererseits ist es aber auch möglich, den Tragrahmen separat zum Vorderachsrahmen vorzusehen und die beiden Rahmen relativbewegbar zueinander anzuordnen.

Insbesondere kann der Tragrahmen mit Köpfern und Rodern für 6-reihige Arbeitsweise oder mehr ausgestattet sein.

Zusätzlich kann ein um eine Horizontalachse schwenkbares Gelenk vorgesehen oder zumindest eines der Knickgelenke so ausgebildet sein, daß sich der Vorderachsrahmen gegenüber dem Hinterachsrahmen bewegen kann. Diese Bewegungsmöglichkeit dient dem Überfahren von Bodenwellen.

Die Erfindung wird anhand bevorzugter Ausführungsbeispiele weiter erläutert und beschrieben. Es zeigen:
- Fig. 1: eine schematisierte Seitenansicht der selbstfahrenden Rübenerntemaschine als Köpfroderbunker,
- Fig. 2: eine Draufsicht auf wesentliche Teile der Rübenerntemaschine gemäß Fig. 1 zur Verdeutlichung von Lenkbewegungen während der Straßenfahrt,
- Fig. 3: eine Draufsicht auf die Rübenerntemaschine zur Verdeutlichung bei Lenkbewegungen während der Arbeitsfahrt,
- Fig. 4: eine Draufsicht auf eine weitere Ausführungsform der Rübenerntemaschine in Kurvenfahrt,
- Fig. 5: eine Draufsicht auf eine weitere Ausführungsform der Rübenerntemaschine in Arbeitsfahrt und
- Fig. 6: eine Draufsicht auf eine weitere Ausführungsform der Rübenerntemaschine in Kurvenfahrt.

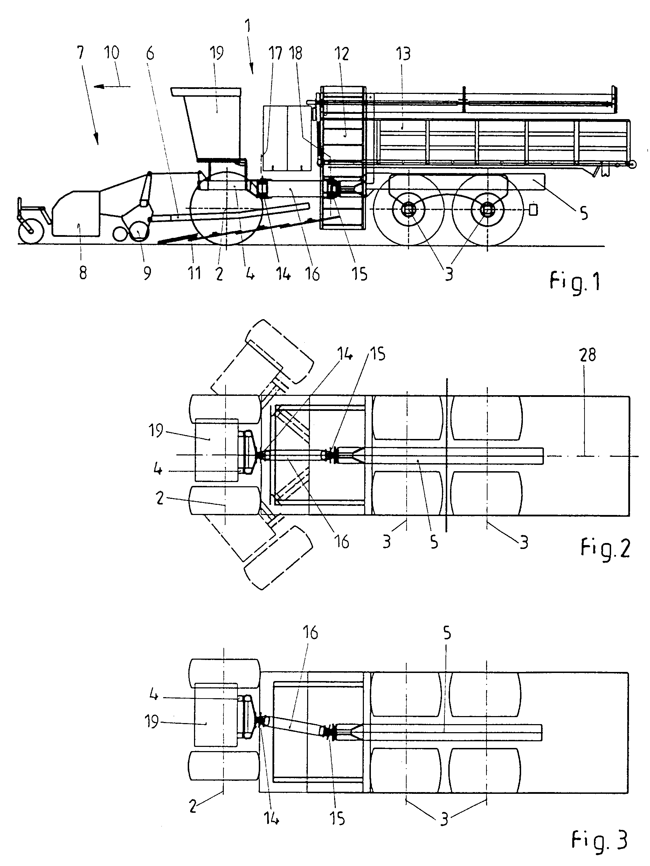

Die in Fig. 1 dargestellte Rübenerntemaschine 1 besitzt eine Vorderachse 2 und zwei Hinterachsen 3, die sämtlich als Starrachsen ausgebildet sind. Die Anzahl der Achsen ist unerheblich. Es muß nur mindestens eine Vorderachse 2 und mindestens eine Hinterachse 3 vorgesehen sein. Die Vorderachse 2 trägt einen Vorderachsrahmen 4, auf dem eine Fahrerkabine 19 angeordnet ist.

Ein von dem Vorderachsrahmen 4 separater Hinterachsrahmen 5 wird von der Hinterachse 3 getragen. Im Bereich der Vorderachse 2 ist weiterhin ein Tragrahmen 6 vorgesehen, auf dem Arbeitswerkzeuge 7 angeordnet sind, hier eine Köpfeinrichtung 8 und eine Rodeeinrichtung 9. Die Arbeitswerkzeuge 7 sind je nach der Art der Rübenerntemaschine 1 ausgebildet und angeordnet. Der Tragrahmen 6 kann starr mit dem Vorderachsrahmen 4 verbunden oder auch einstückig mit diesem gestaltet sein. Es ist aber auch möglich, den Tragrahmen 6 relativbeweglich an dem Vorderachsrahmen 4 aufzuhängen, um eine zusätzliche Bewegungsmöglichkeit für die Arbeitswerkzeuge 7 quer zur Fahrtrichtung 10 zu schaffen. Ansonsten kann die Rübenerntemaschine übliche Elemente aufweisen, beispielsweise eine Förder- und Reinigungseinrichtung 11, einen Rübenelevator 12 und einen Bunker 13.

Die Rübenerntemaschine 1 besitzt eine Lenkeinrichtung, zu der als wesentliche Elemente zwei Knickgelenke 14 und 15 und ein Koppelträger 16 gehören. Das Knickgelenk 14 ist am hinteren Ende des Vorderachsrahmens 4 vorgesehen und ermöglicht die Verschwenkung zwischen dem Vorderachsrahmen 4 und dem Koppelträger 16 um eine vertikale Achse 17. Das Knickgelenk 15 ist am vorderen Ende des Hinterachsrahmens 5 vorgesehen und ermöglicht eine Verschwenkung zwischen dem Koppelträger 16 und dem Hinterachsrahmen 5 um eine vertikale Achse 18.

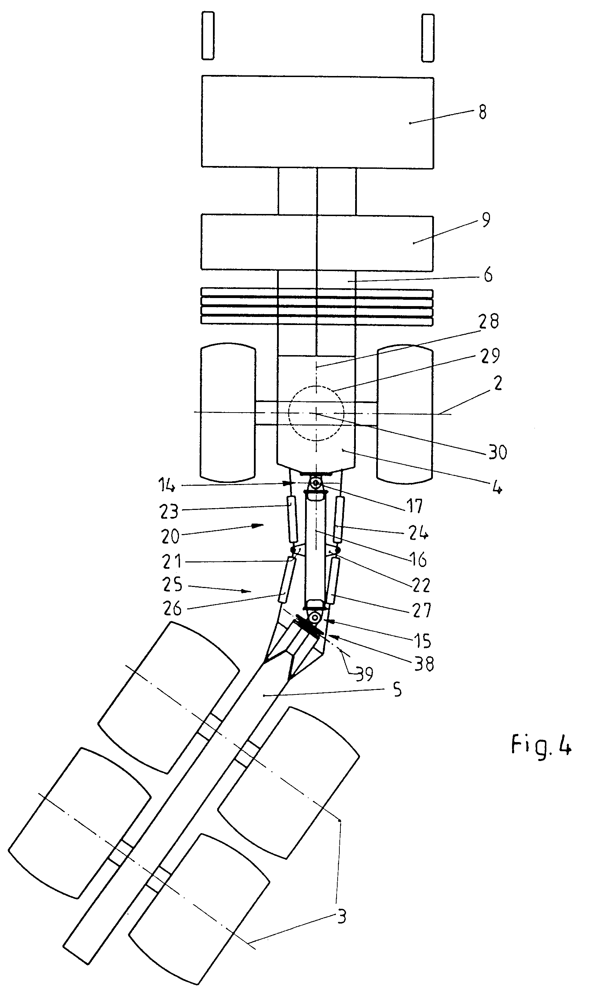

Dem Knickgelenk 14 ist eine Betätigungseinrichtung 20 (Fig. 4) zugeordnet. Die Betätigungseinrichtung 20 ist zwischen den Koppelträger 16 und den Vorderachsrahmen 4 geschaltet. Zu diesem Zweck weist der Koppelträger zwei Kragarme 21 und 22 auf, zwischen deren Enden und dem Vorderachsrahmen 4 jeweils ein doppelt wirkender, hydraulischer Zylinder 23 bzw. 24 angeordnet ist. Durch entsprechende Steuerung der Betätigungseinrichtung 20 ergibt sich eine Drehverschwenkung im Knickgelenk 14 um die vertikale Achse 17. Analog ist eine Betätigungseinrichtung 25 dem Knickgelenk 15 zugeordnet. Zwei hydraulische Zylinder 26 und 27 sind zwischen den Kragarmen 21 und 22 und dem Hinterachsrahmen 5 in der dargestellten Weise vorgesehen. Gemäß der in Fig. 4 dargestellten Stellung befinden sich die Lenkungsteile der Rübenerntemaschine 1 in einer Linkskurve während des Transportes, also bei Fahrt auf der Straße. Das vordere Knickgelenk 14 ist über die Betätigungseinrichtung 20 festgestellt, also blockiert, so daß sich der Koppelträger 16 symmetrisch zur vertikalen Längsmittelebene 28 des vorderen Teils der Rübenerntemaschine 1 befindet. Allein die Betätigungseinrichtung 25 wird so gesteuert, daß die Kurvenfahrt ermöglicht wird. Es versteht sich, daß es auch möglich ist, das Knickgelenk 15 festzustellen und das Knickgelenk 14 für die Kurvenfahrt auf der Straße zu nutzen. Fig. 2 verdeutlicht in gestrichelter Darstellung diese Kurvenfahrt für eine Links- bzw. Rechtskurve. Fig. 3 hingegen verdeutlicht eine Arbeitsfahrt, also beispielsweise während des Rodens auf dem Feld. Die beiden Betätigungseinrichtungen 20 und 25 sind gegenläufig gesteuert bzw. gelenkt, so daß die Starrachse der Vorderachse 2 näher an den noch stehenden Rüben des Rübenfeldes geführt und gefahren werden kann, als die Hinterachsen 3. Damit besteht bei Lenkbewegungen nicht die Gefahr, daß die Rübenerntemaschine 1 in die noch stehenden Rüben hineinfährt. Da die Arbeitswerkzeuge 7 insbesondere bei vielreihiger Arbeitsweise auch seitlich über die Räder der Achsen vorstehen, ermöglicht das versetzte Fahren gemäß Fig. 3 einen Vorteil beim Überladen, indem nämlich die Ausladung entsprechend verringert ist. Auch läßt es sich so einrichten, daß die Räder der Hinterachsen 3 neben der Spur der Räder der Vorderachsen 2 versetzt laufen, so daß die Bodenverdichtung örtlich reduziert wird.

Bei der Ausführungsform gemäß Fig. 4 ist der Tragrahmen 6 für die Arbeitswerkzeuge 7 einstückig mit dem Vorderachsrahmen 4 ausgebildet. Die Vorderachse 2 besitzt einen Drehschemel 29, mit dessen Hilfe die als Starrachse ausgebildete Vorderachse 2 um eine Vertikalachse 30 schwenkbar ist. Bei allen Ausführungsformen ist zweckmäßig hinter dem hinteren Knickgelenk 15 ein Gelenk 38 angeordnet, welches eine Bewegung des Hinterachsrahmens 5 gegenübwer dem Vorderachsrahmen 4 um eine Horizontalachse 39 ermöglicht. Das Gelenk 38 kann aber auch vor dem Knickgelenk 14 oder auch im Bereich des Koppelträgers 16 angeordnet sein. Eine weitere Möglichkeit besteht darin, die Knickgelenke 14 und/oder 15 so auszubilden, daß diese Beweglichkeit ermöglicht wird.

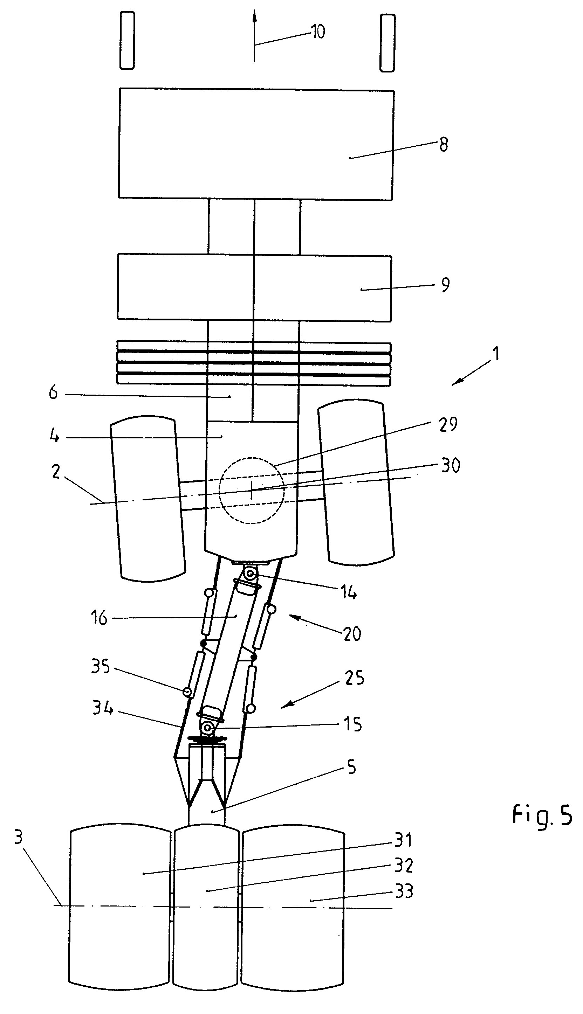

Fig. 5 zeigt eine modifizierte Ausführungsform der Rübenerntemaschine 1 und zeigt eine Stellung, bei der die Vorderachse 2 vermittels des Drehschemels 29 relativ zur Fahrtrichtung 10 verschwenkt ist. Es ist hier nur eine Hinterachse 3 vorgesehen, die drei Räder 31, 32, 33 trägt, die nebeneinander angeordnet sind und sich über die gesamte Breite erstrecken, so daß die Bodenverdichtung entsprechend reduziert wird. Die Betätigungseinrichtungen 20 und 25 besitzen je eine Zahnstange 34 sowie einen Motor 35, so daß auf diese Art und Weise die verschiedenen Schwenkbewegungen eingesteuert werden können.

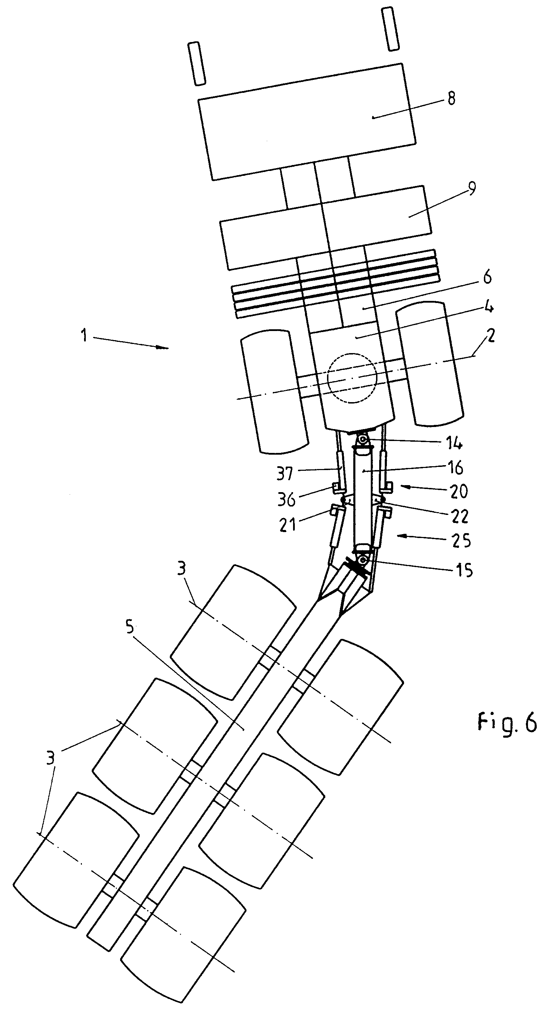

Fig. 6 zeigt eine Ausführungsform der Rübenerntemaschine 1, bei der drei Hinterachsen 3 vorgesehen sind, die den Hinterachsrahmen 5 tragen. Jede Betätigungseinrichtung 20 und 25 weist einen hydraulischen Schrittmotor 36 auf, dem jeweils ein Zylinder 37 nachgeschaltet ist. Auch hier sind die Schrittmotore 36 und die Zylinder 37 in der bereits in den Fig. 4 und 5 verdeutlichten Relativlage zu der Koppelstange 16 angeordnet.

### BEZUGSZEICHENLISTE

- 1: - Rübenerntemaschine
- 2: - Vorderachse
- 3: - Hinterachse
- 4: - Vorderachsrahmen
- 5: - Hinterachsrahmen
- 6: - Tragrahmen
- 7: - Arbeitswerkzeuge
- 8: - Köpfeinrichtung
- 9: - Rodeeinrichtung
- 10: - Fahrtrichtung
- 11: - Förder- und Reinigungseinr.
- 12: - Rübenelevator
- 13: - Bunker
- 14: - Knickgelenk
- 15: - Knickgelenk
- 16: - Koppelträger
- 17: - Achse
- 18: - Achse
- 19: - Fahrerkabine
- 20: - Betätigungseinrichtung
- 21: - Kragarm
- 22: - Kragarm
- 23: - Zylinder
- 24: - Zylinder
- 25: - Betätigungseinrichtung
- 26: - Zylinder
- 27: - Zylinder
- 28: - Längsmittelebene
- 29: - Drehschemel
- 30: - Vertikalachse
- 31: - Rad
- 32: - Rad
- 33: - Rad
- 34: - Zahnstange
- 35: - Motor
- 36: - Schrittmotor
- 37: - Zylinder
- 38: - Gelenk
- 39: - Horizontalachse

## Patentansprüche

1. Selbstfahrende Rübenerntemaschine (1), mit mindestens einer Vorderachse (2) und mindestens einer Hinterachse (3), einem Maschinenrahmen und einen Tragrahmen (6), auf dem Arbeitswerkzeuge (7), insbesondere eine Köpf- (8) und eine nachgeordnete Rodeeinrichtung (9), angeordnet sind, wobei eine sich auf die Räder aller Achsen (2, 3) auswirkende Lenkeinrichtung vorgesehen ist, **dadurch gekennzeichnet**, daß der Maschinenrahmen in einen Vorderachsrahmen (4) und einen Hinterachsrahmen (5) unterteilt ist, daß die Lenkeinrichtung zwei um vertikale Achsen (17, 18) schwenkbare Knickgelenke (14, 15) aufweist, daß das eine Knickgelenk (14) an den Vorderachsrahmen (4) und das andere Knickgelenk (15) an dem Hinterachsrahmen (5) angeordnet ist, daß die beiden Knickgelenke (14, 15) beabstandet zueinander in der Längsmittelebene (28) der Rübenerntemaschine (1) angeordnet und über einen Koppelträger (16) miteinander verbunden sind, und daß jedes Knickgelenk (14, 15) mit je einer Betätigungseinrichtung (20, 25) ausgestattet ist.

2. Rübenerntemaschine nach Anspruch 1, **dadurch gekennzeichnet**, daß die Vorderachse (2) und die Hinterachse (3) der Rübenerntemaschine (1) als Starrachsen ausgebildet sind.

3. Rübenerntemaschine nach Anspruch 1 oder 2, **dadurch gekennzeichnet**, daß zwischen der Vorderachse (2) und dem Vorderachsrahmen (4) ein Drehschemel (29) vorgesehen ist.

4. Rübenerntemaschine nach Anspruch 1, **dadurch gekennzeichnet**, daß als Betätigungseinrichtung (20, 25) eine hydraulische Verstelleinrichtung mit doppelt-wirkenden Zylindern (23, 24, 26, 27) vorgesehen ist.

5. Rübenerntemaschine nach Anspruch 1, **dadurch gekennzeichnet**, daß als Betätigungseinrichtung (20, 25) elektrische oder hydraulische Schrittmotore (36) vorgesehen ist.

6. Rübenerntemaschine nach einem oder mehreren der Ansprüche 1 bis 5, **dadurch gekennzeichnet**, daß der Hinterachsrahmen (5) auf zwei Hinterachsen (3) abgestützt ist.

7. Rübenerntemaschine nach einem oder mehreren der Ansprüche 1 bis 6, **dadurch gekennzeichnet**, daß eine Hinterachse (3) mit mehr als zwei Rädern (31, 32, 33) vorgesehen ist, wobei die Räder über die Breite der Rübenerntemaschine verteilt angeordnet sind.

8. Rübenerntemaschine nach einem oder mehreren der Ansprüche 1 bis 7, **dadurch gekennzeichnet**, daß der Tragrahmen (6) mit dem Vorderachsrahmen (4) drehfest verbunden oder einstückig ausgebildet ist.

9. Rübenerntemaschine nach einem oder mehreren der Ansprüche 1 bis 8, **dadurch gekennzeichnet**, daß der Tragrahmen (6) mit Köpfern und Rodern für 6-reihige Arbeitsweise ausgestattet ist.

10. Rübenerntemaschine nach Anspruch 1, **dadurch gekennzeichnet**, daß zusätzlich ein um eine Horizontalachse (39) schwenkbares Gelenk (38) vorgesehen oder zumindest eines der Knickgelenke (14, 15) so ausgebildet ist, daß sich der Vorderachsrahmen (4) gegenüber dem Hinterachsrahmen (5) bewegen kann.
